# EUROPEAN PATENT SPECIFICATION

(11) **EP 2 337 187 B1**
(45) Date of publication and mention of the grant of the patent: **31.07.2013**
(21) Application number: 09461518.4
(22) Date of filing: 15.12.2009
(51) Int. Cl.: H02K 3/12, H02K 3/51

(54) **Pole-to-pole connection arrangement for an electric generator**
Pol-zu-Pol-Verbindungsanordnung für einen Generator
Arrangement d'un connexion pôle à pôle pour un générateur électrique

(43) Date of publication of application: 22.06.2011
(73) Proprietor: Alstom Technology Ltd, 5400 Baden (CH)
(72) Inventor: Maciejewski, Lukasz, PL 55-080 Smolec (PL); Majdzik, Maciej, PL 53-152 Wroclaw (PL); Wiebe, Markus, CH-4054 Basel (CH); Thiery, Michel, F-90350 Evette Salbert (FR)

(56) References cited:
- US-A1- 2005 285 469
- US-B1- 6 930 434

## Description

### TECHNICAL FIELD

The present invention relates to a pole-to-pole connection of an electric generator and a method for manufacturing the same.

### BACKGROUND OF THE INVENTION

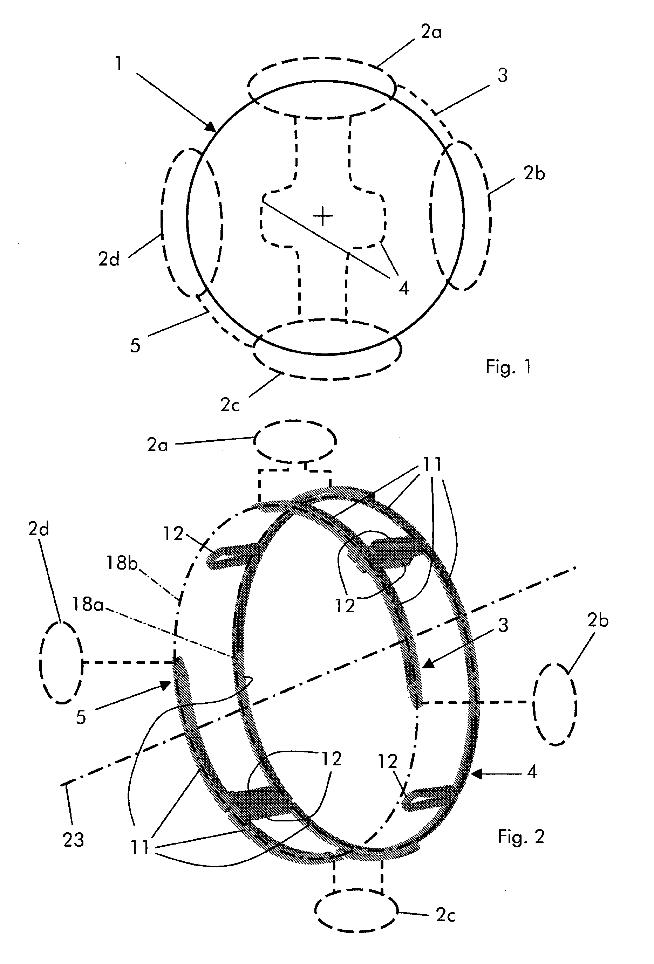

Electric generators are known to comprise a rotor that carries windings defining two or more poles; figure 1 shows an example of a rotor 1 having four poles 2a-2d.

The four poles 2a-2d are connected each other via pole-to-pole connections 3, 4, 5.

In particular, a first pole-to-pole connection 3 connects two adjacent poles 2a, 2b; a second pole-to-pole connection 4 connects two opposite poles 2a, 2c, and a third pole-to-pole connection 5 connects two further adjacent poles 2c, 2d.

Typically, for symmetry reasons, connection 4 is made of two conductors, each having half the thickness of those conductors defining the connections 3 and 5.

Pole-to-pole connections are defined by curved bars that extend around the rotor 1 and, during operation, must withstand high centrifugal forces and thermal loads that make them to deform.

For these reasons, the curved bars are provided with expansion joints that let deformations be adsorbed without causing dangerous stresses within them.

In a first traditional embodiment expansion joints are made of U-shaped elements made of three copper blocks brazed together.

Nevertheless manufacturing of these expansion joints is very time-consuming, since the blocks must be separately manufactured and then must be brazed together while avoiding any copper decrease of properties or recrystallization.

In a second traditional embodiment expansion joints are made of copper brackets brazed to the curved bars and a set of overlaying copper lamellas withheld within the brackets.

Nevertheless for large machines a large number of overlaying lamellas is required; this increases the stiffness of the pole-to-pole connections and, in some cases, could reduce the pole-to-pole connection lifetime.

US 5,065,059 discloses a pole-to-pole connection for generators comprising U-shaped elements; the U-shaped elements are machined from high conductive copper.

Manufacturing of U-shaped elements by traditional methods induces high residual stresses into them that reduce the U-shaped element lifetime.

US 2005/285469 A1 discloses a pole-To-pole connection with U-shaped elements cut out the required final shape from a single plate according to the preamble of claim 1.

### SUMMARY OF THE INVENTION

The technical aim of the present invention is therefore to provide a pole-to-pole connection and a method for its manufacturing by which the said problems of the known art are eliminated.

Within the scope of this technical aim, an aspect of the invention is to provide a pole-to-pole connection having expansion joints that can be manufactured in a short time and do not require manufacturing operations that could impair their mechanical properties.

Another aspect of the invention is to provide a pole-to-pole connection having expansion joints that may have the required flexibility for all generator sizes, such that an increase of the pole-to-pole connection lifetime, in particular for large generators, is achieved.

A further aspect of the present invention is to provide a pole-to-pole connection having U-shaped elements in which, during manufacturing, only very limited residual stresses are induced, such that their lifetime is increased.

Another aspect of the invention is to provide a method that can be implemented in a short time, without impairing the U-shaped elements and that induces only very limited residual stresses into the finished U-shaped elements.

The technical aim, together with these and further aspects, are attained according to the invention by providing a pole-to-pole connection in accordance with the accompanying claims.

### BRIEF DESCRIPTION OF THE DRAWINGS

Further characteristics and advantages of the invention will be more apparent from the description of a preferred but non-exclusive embodiment of the pole-to-pole connection and method according to the invention, illustrated by way of non-limiting example in the accompanying drawings, in which:
Figure 1 is a schematic view of a four pole rotor;
Figure 2 in a perspective view of pole-to-pole connections of the four pole generator of figure 1;
Figure 3 is a perspective view of two overlapping U-shaped elements of a pole-to-pole connection; and
Figure 4 is a top view of two overlapping U-shaped elements of a pole-to-pole connection.

### DETAILED DESCRIPTION OF THE INVENTION

With reference to the figures, these show pole-to-pole connections of an electric generator each comprising two or more curved bars 11 connecting the poles of an electric generator and expansion joints 12 in-between.

In particular, figure 2 shows pole-to-pole connections between four poles of an electric generator being the electric generator of figure 1.

Consequently, figure 2 shows four curved bars 11 with four expansion joints 12 that define the pole-to-pole connection 4, two curved bars 11 with an expansion joint 12 defining the pole-to-pole connection 3 and two further curved bars 11 with an expansion joint 12 defining the pole-to-pole connection 5.

For symmetry reasons, the pole-to-pole connection 4 is made of four bars having half the thickness of those bars defining the pole-to-pole connections 3 and 5.

Alternatively, when bars having the same profile (and thickness) are used, connections 3 and 5 are made of overlaying bars and the total number of bars in each connection 3, 4, 5 is four.

Each expansion joint 12 comprises a U-shaped element cut out to the required final shape from a single plate and connected to the curved bars 11.

This lets further manufacturing operations such as for example bending be avoided.

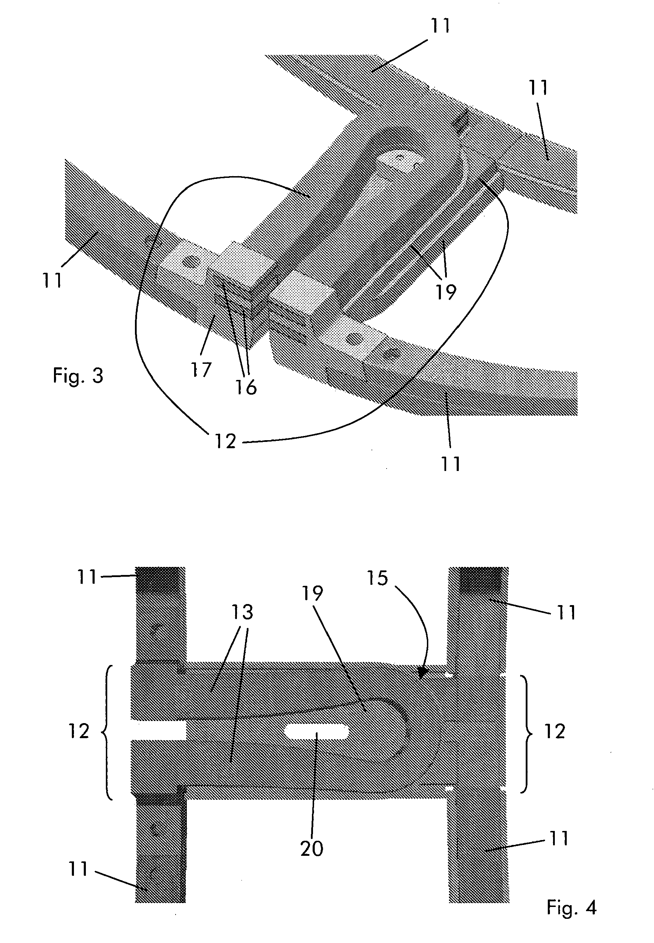

In particular, the jaws 13 of the U-shaped elements 12 are not parallel, i.e. their borders in a top view (as shown in figure 4) are not parallel.

In addition, the thickness of the U-shaped element 12 in the plane containing it (being the plane of figure 4) is not constant; in particular the thickness at the curved region 15 is smaller than the thickness at the jaws 13.

The thickness of the U-shaped elements 12 in a plane perpendicular to that plane containing the U-shaped element 12 is constant; this lets the U-shaped elements rest one over the other.

The jaw ends 16 of each U-shaped element are brazed to the curved bars 11 typically via brackets 17.

In particular, figure 2 shows pole-to-pole connections 3-5 between the four poles of a four pole generator.

In this embodiment, the curved bars 11 defining the pole-to-pole connections 3, 4, 5 extend along two parallel spaced apart circumferences 18a, 18b around the rotor (only the axis 23 of the rotor is shown in figure 2).

In this respect the pole-to-pole connection 4 extends along a first circumference 18a and the pole-to-pole connections 3 and 5 extend along sectors of a second circumference 18b spaced apart from the first circumference 18a.

The U-shaped elements 12 of each pole-to-pole connection 3, 4, 5 axially extend (i.e. parallel to the rotor axis 23) towards the other circumference; for example a U-shaped element of a pole-to-pole connection extending along circumference 18a axially extends towards circumference 18b.

In particular, the U-shaped elements 12 that extend from different circumferences 18a and 18b have the same circumferential position and overlap one another.

This lets the U-shaped elements have the greatest length possible for the available space (to reduce their stress).

In addition, an insulating layer 19 is provided between the overlapping U-shaped elements 12 to avoid short circuits.

The insulating layer 19 comprises a cooling through hole 20.

In the following a method for manufacturing pole-to-pole connections of an electric generator is described.

The method consists in cutting out to the required final shape a U-shaped element from a single plate and connecting it (for example by brazing) to the curved bars 11 at their jaws 13.

Advantageously, during brazing, the U-shaped element is cooled; this lets the mechanical properties of the U-shaped element be safeguarded.

Since the U-shaped elements are cut out from a single plate element and are not bent, i.e. they are cut out to the required final U-shape, manufacturing is fast and only very limited residual stresses are induced into them.

In practice the materials used and the dimensions can be chosen according to requirements.

### REFERENCE NUMBERS

1 rotor
2a, 2b, 2c, 2d poles
3, 4, 5 pole-to-pole connection
11 curved bar
12 U-shaped element
13 jaw
15 curved region of 12
16 jaw end
17 bracket
18a, 18b circumference
19 insulating layer
20 through hole of 19
23 rotor axis

## Claims

1. Pole-to-pole connection arangement for an electric generator, each pole-to-pole connection (3,4,5) of the arrangement comprising at least two curved bars (11) for connecting the poles (2a, 2b, 2c, 2d) of an electric generator and comprising at least an expansion joint in-between, each pole-to-pole connection extending along a circumference (18a) and facing at least a further pole-to-pole 5 connection extending along a parallel spaced apart circumference (18b), wherein each expansion joint comprises a U-shaped element (12) cut out to the required final shape from a single plate and connected to the curved bars (11), wherein jaw ends of the U-shaped elements (12) are connected to the curved bars (11), wherein the U-shaped elements (12) of a pole-to-pole connection extending along a circumference (18a, 18b) axially extend towards the other circumference (18b, 18a), **Characterised in that** U-shaped elements (12) that extend from different circumferences (18a, 18b) have the same circumferential position and overlap one another.

2. Pole-to-pole connection arrangement as claimed in claim 1, **characterised in that** jaws (13) of the U-shaped element (12) are not parallel.

3. Pole-to-pole connection arrangement as claimed in claim 1, **characterised in that** the thickness of the U-shaped element (12) in a plane containing the same U-shaped element (12) is not constant.

4. Pole-to-pole connection arrangement as claimed in claim 3, **characterised in that** the thickness at a curved region (15) of the U-shaped element (12) is smaller than the thickness at its jaws (13).

5. Pole-to-pole connection arrangement as claimed in claim 4, **characterised in that** the thickness of the U-shaped element (12) in a plane perpendicular to that plane containing the U-shaped element (12) is constant.

6. Pole-to-pole connection arrangement as claimed in claim 1, **characterised by** comprising an insulating layer (19) between the overlapping U-shaped elements (12).

7. Pole-to-pole connection arrangement as claimed in claim 7, **characterised in that** the insulating layer (19) comprises a cooling through hole (20).

## Patentansprüche

1. Pol-zu-Pol-Verbindungsanordnung für einen elektrischen Generator, wobei jede Pol-zu-Pol-Verbindung (3, 4, 5) der Anordnung mindestens zwei gekrümmte Stäbe (11) umfasst, um die Pole (2a, 2b, 2c, 2d) eines elektrischen Generators zu verbinden, und dazwischen mindestens ein Dehnungsstück umfasst, wobei sich jede Pol-zu-Pol-Verbindung entlang eines Umfangs (18a) erstreckt und mindestens einer weiteren Pol-zu-Pol-Verbindung, die sich entlang eines parallel beabstandeten Umfangs (18b) erstreckt, gegenüberliegt, wobei jedes Dehnungsstück ein U-förmiges Element (12) umfasst, das aus einer einzelnen Platte in die erforderliche Endform herausgeschnitten ist und an die gekrümmten Stäbe (11) angeschlossen ist, wobei Backenenden der U-förmigen Elemente (12) an die gekrümmten Stäbe (11) angeschlossen sind, wobei sich die U-förmigen Elemente (12) einer Pol-zu-Pol-Verbindung entlang eines Umfangs (18a, 18b) axial in Richtung des anderen Umfangs (18b, 18a) erstrecken,
**dadurch gekennzeichnet, dass** die U-förmigen Elemente (12), die sich von verschiedenen Umfängen (18a, 18b) erstrecken, dieselbe Umfangsposition aufweisen und sich gegenseitig überlappen.

2. Pol-zu-Pol-Verbindungsanordnung nach Anspruch 1, **dadurch gekennzeichnet, dass** die Backen (13) des U-förmigen Elements (12) nicht parallel sind.

3. Pol-zu-Pol-Verbindungsanordnung nach Anspruch 1, **dadurch gekennzeichnet, dass** die Dicke des U-förmigen Elements (12) in einer Ebene, die dasselbe U-förmige Element (12) enthält, nicht konstant ist.

4. Pol-zu-Pol-Verbindungsanordnung nach Anspruch 3, **dadurch gekennzeichnet, dass** die Dicke an einem gekrümmten Bereich (15) des U-förmigen Elements (12) kleiner als die Dicke an dessen Backen (13) ist.

5. Pol-zu-Pol-Verbindungsanordnung nach Anspruch 4, **dadurch gekennzeichnet, dass** die Dicke des U-förmigen Elements (12) in einer Ebene, die senkrecht zu der Ebene ist, die das U-förmige Element (12) enthält, konstant ist.

6. Pol-zu-Pol-Verbindungsanordnung nach Anspruch 1, **dadurch gekennzeichnet, dass** eine Isolationsschicht (19) zwischen den überlappenden U-förmigen Elementen (12) enthalten ist.

7. Pol-zu-Pol-Verbindungsanordnung nach Anspruch 6, **dadurch gekennzeichnet, dass** die Isolationsschicht (19) eine Kühlung durch ein Loch (20) umfasst.

## Revendications

1. Agencement de connexions pôle à pôle pour un générateur électrique, chaque connexion pôle à pôle (3, 4, 5) de l'agencement comprenant au moins deux barres incurvées (11) servant à connecter les pôles (2a, 2b, 2c, 2d) d'un générateur électrique et comprenant entre elles au moins un joint de dilatation, chaque connexion pôle à pôle s'étendant suivant une circonférence (18a) et se situant en regard d'au moins une autre connexion pôle à pôle s'étendant suivant une circonférence espacée parallèle (18b), chaque joint de dilatation comprenant un élément en U (12) découpé dans une seule plaque à la forme finale requise et connecté aux barres incurvées (11), des extrémités de mors des éléments en U (12) étant connectées aux barres incurvées (11), les éléments en U (12) d'une connexion pôle à pôle qui s'étendent suivant une circonférence (18a, 18b) s'étendant axialement vers l'autre circonférence (18b, 18a), **caractérisé en ce que** des éléments en U (12) qui s'étendent depuis des circonférences différentes (18a, 18b) occupent la même position circonférentielle et se chevauchent.

2. Agencement de connexions pôle à pôle selon la revendication 1, **caractérisé en ce que** des mors (13) de l'élément en U (12) ne sont pas parallèles.

3. Agencement de connexions pôle à pôle selon la revendication 1, **caractérisé en ce que** l'épaisseur de l'élément en U (12) dans un plan contenant le même élément en U (12) n'est pas constante.

4. Agencement de connexions pôle à pôle selon la revendication 3, **caractérisé en ce que** l'épaisseur au niveau d'une région incurvée (15) de l'élément en U (12) est plus petite que l'épaisseur au niveau de ses mors (13).

5. Agencement de connexions pôle à pôle selon la revendication 4, **caractérisé en ce que** l'épaisseur de l'élément en U (12) dans un plan perpendiculaire au plan contenant l'élément en U (12) est constante.

6. Agencement de connexions pôle à pôle selon la revendication 1, **caractérisé en ce qu'**il comprend une couche isolante (19) entre les éléments en U (12) en chevauchement.

7. Agencement de connexions pôle à pôle selon la revendication 6, **caractérisé en ce que** la couche isolante (19) comprend un trou de refroidissement traversant (20).
